# EUROPEAN PATENT APPLICATION

(11) **EP 4 541 851 A1**
(43) Date of publication of application: **23.04.2025**
(21) Application number: 23823948.7
(22) Date of filing: 14.06.2023
(51) Int. Cl.: C08L 59/00, C08G 2/24, C08K 5/09

(54) **POLYACETAL RESIN COMPOSITION**

(30) Priority: 15.06.2022 JP 2022096298
(71) Applicant: MITSUBISHI GAS CHEMICAL COMPANY, INC., Chiyoda-ku Tokyo 100-8324 (JP)
(72) Inventor: MICHIBA Kiyonori, Tokyo 100-8324 (JP); SUNAGA Daisuke, Tokyo 100-8324 (JP)
(74) Representative: Müller-Boré & Partner Patentanwälte PartG mbB
(86) International application number: PCT/JP2023/022073
(87) International publication number: WO 2023/243658

(57) **Abstract**

The present invention provides: a polyacetal resin composition; a metal resin composition; and a method for producing a polyacetal resin composition. The present invention provides a polyacetal resin composition which contains 100 parts by weight of a polyacetal resin (A) and 0.1 to 0.9 part by weight of a fatty acid metal salt (B) having a weight loss rate of 20% by weight of more, the weight loss rate being the ratio of weight loss after the fatty acid metal salt is heated from room temperature to 200°C at a rate of 200°C/minute in the air at atmospheric pressure and is subsequently held at 200°C for 60 minutes.

## Description

### TECHNICAL FIELD

The present invention relates to a polyacetal resin composition, more particularly to a polyacetal resin composition used by kneading with metal powder. The present invention also relates to a metal resin composition containing the polyacetal resin composition and metal powder, to a method for producing the polyacetal resin composition, and to a method for producing a powder injection-molded article using the polyacetal resin composition as a binder resin composition.

### BACKGROUND ART

Recently, a powder injection molding process has been used to produce a metal molded article by injection molding a kneaded mixture obtained by kneading a binder resin composition and metal powder. The powder injection molding process is superior in terms of freedom of shape and material of the molded article, and dimensional precision.

Polyacetal resins are widely used as engineering plastics to take advantage of their mechanical property, friction/wear property, chemical resistance, heat resistance, or electrical property. Polyacetal resins are also preferred as binder resin compositions for metal powder in the powder injection molding process because they can be easily removed by combustion and their ash residue can be reduced.

Patent literature 1 discloses a polyacetal resin composition comprising 100 parts by mass of a polyacetal resin (A), 0.005-0.2 parts by mass of a nitrogen-containing compound (B), and 0.01-0.8 parts by mass of a fatty acid metal salt (C) such as calcium stearate, wherein the ratio of the content of the fatty acid metal salt (C) to that of the nitrogen-containing compound (B) is 1-15.

### CITATION LIST

### Patent Literature

Patent literature 1: Japanese Unexamined Patent Application Publication No. 2020-041133
Patent literature 2: International Publication WO2017/200069

### SUMMARY OF INVENTION

### Technical Problem

When a polyacetal resin composition is used by kneading with metal powder (i.e., used as a binder resin composition for metal powder), certain amounts of a nitrogen-containing compound and a fatty acid metal salt are added to the polyacetal resin to improve the thermal stability and flowability of the kneaded mixture (metal resin composition) (Patent literature 1). However, the use of a fatty acid metal salt such as calcium stearate is known to cause significant yellowing of the polyacetal resin composition (Patent literature 2).

In view of the above, there is a need for suppressing yellowing and improving the hue of a polyacetal resin composition containing a fatty acid metal salt.

### Solution to Problem

Thus, the present invention includes the following aspects.
[1] A polyacetal resin composition, comprising:
   100 parts by weight of a polyacetal resin (A); and
   0.1-0.9 parts by weight of a fatty acid metal salt (B) whose weight loss rate is 20% by weight or more,
   wherein, the weight loss rate is the percentage of weight loss that occurs when the temperature is increased from room temperature to 200°C at 200°C/min in air at atmospheric pressure and held at 200°C for 60 minutes.
[2] The polyacetal resin composition according to [1], wherein the fatty acid metal salt (B) is magnesium stearate whose weight loss rate is 20% by weight or more, aluminum stearate whose weight loss rate is 20% by weight or more, or a combination thereof.
[3] The polyacetal resin composition according to either one of [1] and [2], wherein the melt flow rate of the polyacetal resin (A) is 40-100 g/10 min (temperature: 190°C, load: 2.16 kg).
[4] The polyacetal resin composition according to any one of [1]-[3], comprising 0.14-0.6 parts by weight of the fatty acid metal salt (B).
[5] The polyacetal resin composition according to any one of [1]-[4], wherein the polyacetal resin (A) is a crude polymer of a polyoxymethylene copolymer in which the polymerization catalyst has been deactivated but the unstable terminal group is not stabilized at the end of copolymerization.
[6] The polyacetal resin composition according to any one of [1]-[5], further comprising 0.01-1.0 parts by weight of one or more stabilizers.
[7] The polyacetal resin composition according to any one of [1]-[6], which is used by kneading with metal powder.
[8] A metal resin compositions, comprising:
   the polyacetal resin composition according to any one of [1]-[7]; and
   metal powder (C).
[9] A method for producing a polyacetal resin composition which is used by kneading with metal powder, the method comprising a step of:
   melt-kneading 100 parts by weight of a polyacetal resin (A) and 0.1-0.9 parts by weight of a fatty acid metal salt (B) whose weight loss rate is 20% by weight or more to prepare the polyacetal resin composition,
   wherein, the weight loss rate is the percentage of weight loss that occurs when the temperature is increased from room temperature to 200°C at 200°C/min in air at atmospheric pressure and held at 200°C for 60 minutes, and
   the fatty acid metal salt (B) is magnesium stearate whose weight loss rate is 20% by weight or more, aluminum stearate whose weight loss rate is 20% by weight or more, or a combination thereof.
[10] A method for producing a powder injection-molded article, the method comprising a step of injecting a kneaded mixture obtained by melt-kneading metal powder and a binder resin composition into a mold,
   wherein, the binder resin composition is the polyacetal resin composition according to any one of [1]-[7].

### ADVANTAGEOUS EFFECTS OF INVENTION

The present invention is capable of suppressing yellowing and improving hue of a polyacetal resin composition. In particular, a kneaded mixture of a polyacetal resin composition of the present invention and metal powder (metal resin composition) is suitable as a raw material for preparing a small and/or complex product by the powder injection molding process.

### DESCRIPTION OF EMBODIMENTS

### [Polyacetal resin composition]

A polyacetal resin composition of the present invention contains 100 parts by weight of a polyacetal resin (A) and 0.1-0.9 parts by weight of a fatty acid metal salt (B) whose weight loss rate is 20% by weight or more. Specifically, the fatty acid metal salt (B) is magnesium stearate or aluminum stearate, whose weight loss rate is 20% by weight or more, or a combination thereof.

The polyacetal resin composition of the present invention is used by kneading with metal powder (C) and serves as a binder resin composition for metal powder (C). The polyacetal resin composition may be in the form of a solid, powder, strand, pellet, or a combination thereof. The polyacetal resin composition of the present invention is used by kneading with metal powder (C).

A method for producing the polyacetal resin composition of the present invention comprises a step of melt-kneading 100 parts by weight of a polyacetal resin (A) and 0.1-0.9 parts by weight of a fatty acid metal salt (B) whose weight loss rate is 20% by weight or more. The fatty acid metal salt (B) is magnesium stearate whose weight loss rate is 20% by weight or more, aluminum stearate whose weight loss rate is 20% by weight or more, or a combination thereof. The melt-kneading step is conducted at or above the temperature at which the polyacetal resin composition melts (generally 180°C or higher) (at atmospheric pressure).

### [Polyacetal resin (A)]

The polyacetal resin (A) is a polymer that has an acetal bond: -O-CRH- (where R represents a hydrogen atom or an organic group) in the repeat unit, and usually has an oxymethylene group (-OCH₂-), where R is a hydrogen atom, as a main structural unit. The polyacetal resin (A) may be a copolymer (block copolymer) or terpolymer containing one or more repeat structural units other than an oxymethylene group. Moreover, the polyacetal resin (A) may have not only a linear structure but also a branched or cross-linked structure generated by using a glycidyl ether compound, an epoxy compound, an allyl ether compound, etc. as a comonomer and/or termonomer. Examples of the structural unit other than an oxymethylene group include optionally branched oxyalkylene groups with 2 or more but 10 or less carbon atoms, such as an oxyethylene group (-OCH₂CH₂- or - OCH(CH₃)-), an oxypropylene group (-OCH₂CH₂CH₂-, -OCH(CH₃)CH₂- or - OCH₂CH(CH₃)-), or an oxybutylene group (-OCH₂CH₂CH₂CH₂-, -OCH(CH₃)CH₂CH₂-, - OCH₂CH(CH₃)CH₂-, -OCH₂CH₂CH(CH₃)-, -OCH(C₂H₅)CH₂-, or -OCH₂CH(C₂H₅)-). Among them, an optionally branched oxyalkylene group or oxyethylene group (-OCH₂CH₂-) with 2 or more but 4 or less carbon atoms is preferred. The content of the comonomer (structural unit other than an oxymethylene group) in the polyacetal resin (A), based on the weight of the polyacetal resin (A), is 0.1-20% by weight, 0.1-15% by weight, 0.1-10% by weight, 0.1-8% by weight, 0.1-6% by weight, 0.1-4% by weight, 0.1-2% by weight, 0.1-1% by weight, 0.5-15% by weight, 0.5-10% by weight, 0.5-8% by weight, 0.5-6% by weight, 0.5-4% by weight, 0.5-2% by weight, or 0.5-1% by weight.

The polyacetal resin (A) may be one that has or has not yet been subjected to terminal stabilization. For example, the polyacetal resin (A) is a crude polymer of a polyoxymethylene copolymer in which the polymerization catalyst has been deactivated but the unstable terminal group is not stabilized at the end of copolymerization.

Preferably, the polyacetal resin (A) is a copolymer of a cyclic acetal, such as trioxane or tetraoxane, and ethylene oxide or 1,3-dioxolane. For example, the polyacetal resin (A) is an acetal copolymer using 1,3-dioxolane as a comonomer.

The polyacetal resin (A) has a melt flow rate of 1-100 g/10 min, 10-100 g/10 min, 15-100 g/10 min, 20-100 g/10 min, 25-100 g/10 min, 30-100 g/10 min, 35-100 g/10 min, 40-100 g/10 min, 42-100 g/10 min, 45-100 g/10 min, 40-95 g/10 min, 42-95 g/10 min, or 45-95 g/10 min, as measured according to ASTM-D1238 (temperature: 190°C, load: 2.16 kg). Preferably, the polyacetal resin (A) has a melt flow rate of 30-100 g/10 min, 40-100 g/10 min, or 45-95 g/10 min.

The method for producing the polyacetal resin (A) is not particularly limited and it is produced by a known method. For example, a polyacetal resin (A) having an oxymethylene group and an oxyalkylene group with 2-4 carbon atoms as structural units is produced by copolymerizing a cyclic acetal of an oxymethylene group, such as a trimer (trioxane) or a tetramer (tetraoxane) of formaldehyde, with a cyclic acetal containing an oxyalkylene group with 2-5 carbon atoms, such as ethylene oxide, 1,3-dioxolane, 1,3,6-trioxocane, or 1,3-dioxepane.

For example, the polyacetal resin (A) can be obtained by bulk polymerizing a cyclic acetal of an oxymethylene group and a cyclic acetal containing an oxyalkylene group with 2-5 carbon atoms as a comonomer, using a polymerization catalyst. If necessary, a reaction quencher may be used for the deactivation treatment of the polymerization catalyst and polymerization growth terminal. In addition, if necessary, a molecular weight regulator may be used to adjust the molecular weight of the polyacetal resin (A).

The types and amounts of the polymerization catalyst, reaction quencher, and molecular weight regulator are not limited as long as they do not interfere with the effect of the present invention, and any known polymerization catalyst, reaction quencher, and molecular weight regulator may be suitably used.

Examples of the polymerization catalyst include a Lewis acid such as boron trifluoride, tin tetrachloride, titanium tetrachloride, phosphorus pentachloride, phosphorus pentafluoride, arsenic pentafluoride, and antimony pentafluoride, or a complex compound or a salt compound of such a Lewis acid; a protic acid such as trifluoromethanesulfonic acid or perchloric acid; an ester of a protic acid such as an ester of perchloric acid and a lower aliphatic alcohol; an anhydride of a protic acid such as a mixed anhydride of perchloric acid and a lower aliphatic carboxylic acid; or triethyloxonium hexafluorophosphate, triphenylmethyl hexafluoroarsenate, acetyl hexafluoroborate, a heteropoly acid or an acid salt thereof, an isopoly acid or an acid salt thereof, and a perfluoroalkyl sulfonic acid or an acid salt thereof.

The reaction quencher is, for example, a trivalent organophosphorus compound (e.g. triphenylphosphine), an amine compound, an alkali metal, an alkaline earth metal hydroxide, or a combination thereof. The molecular weight regulator is, for example, methylal, methoxymethylal, dimethoxymethylal, trimethoxymethylal, or oxymethylene din-butyl ether.

Furthermore, known additives such as an antioxidant, a heat stabilizer, a colorant, a nucleating agent, a plasticizer, a fluorescent brightener, a sliding agent, an antistatic agent, a UV absorber, or a light stabilizer may be added to the polyacetal resin (A) as required.

### [Fatty acid metal salt (B)]

The fatty acid metal salt (B) is a fatty acid metal salt with a weight loss rate of 20% by weight or more. The "weight loss rate" is measured as follows. A "weight loss rate" is defined as the percentage of weight loss measured using a thermal analyzer (e.g., TGA550: thermal analyzer provided by TA Instruments) when a fatty acid metal salt (B) (e.g., 4 mg) is heated from room temperature (20°C) to 200°C at 200°C/min in air at atmospheric pressure and held at 200°C for 60 minutes. For example, when the weight of the fatty acid metal salt (B) before heating is W₀ and the weight of the fatty acid metal salt (B) heated from room temperature (20°C) to 200°C at 200°C/min in air at atmospheric pressure and held at 200°C for 60 minutes is W₁, the weight loss rate of the fatty acid metal salt (B) is (W₀-W₁)/W₀ x 100 (% by weight).

Specifically, the fatty acid metal salt (B) is magnesium stearate or aluminum stearate, whose weight loss rate is 20% by weight or more, or a combination thereof. While the upper limit of the weight loss rate of the fatty acid metal salt (B) is not particularly limited, the weight loss rate of the fatty acid metal salt (B) is, for example, 20-80% by weight, 20-60% by weight, 20-55% by weight, 20-50% by weight, 22-55% by weight, 22-50% by weight, or 22.7-49.7% by weight.

Alternatively, the weight loss rate of the fatty acid metal salt (B) is 22.7-49.5% by weight or 25-50% by weight.

The content of the fatty acid metal salt (B) in the polyacetal resin composition is 0.1-0.9 parts by weight relative to 100 parts by weight of the polyacetal resin (A). The content of the fatty acid metal salt (B) in the polyacetal resin composition may be 0.1-0.8 parts by weight, 0.1-0.6 parts by weight, 0.1-0.5 parts by weight, 0.1-0.3 parts by weight, 0.1-0.2 parts by weight, 0.12-0.8 parts by weight, 0.12-0.6 parts by weight, 0.12-0.5 parts by weight, 0.12-0.3 parts by weight, 0.12-0.2 parts by weight, 0.14-0.9 parts by weight, 0.14-0.8 parts by weight, 0.14-0.6 parts by weight, 0.14-0.5 parts by weight, 0.14-0.3 parts by weight, 0.14-0.2 parts by weight, or 0.15-0.5 parts by weight.

Alternatively, the content of the fatty acid metal salt (B) in the polyacetal resin composition may be 0.5-0.9 parts by weight.

### [Method for producing polyacetal resin composition]

A method for producing a polyacetal resin composition of the present invention comprises a step of melt-kneading a polyacetal resin (A) and a fatty acid metal salt (B) (melt-kneading step). Melt-kneading can be performed using, for example, a Banbury mixer, a roll, a Brabender, a single- or twin-screw extruder, or a kneader.

The temperature, pressure, and other conditions of the melt-kneading step may be selected as appropriate, taking into account the conventionally known methods for producing polyacetal resin compositions. For example, the melt-kneading step may be performed at or above the melting temperature of the polyacetal resin (A), but, in general, it is preferably performed at 180-240°C or 200-220°C.

A polyacetal resin composition may be prepared by melt-kneading the polyacetal resin (A) and the fatty acid metal salt (B) all at once, such that the above contents are finally achieved for the polyacetal resin (A) and the fatty acid metal salt (B). Alternatively, a polyacetal resin composition containing the fatty acid metal salt (B) at a high concentration is first prepared, which is then diluted by further melt-kneading with another polyacetal resin (A), thereby preparing a polyacetal resin composition.

### [Metal resin composition]

A metal resin composition of the present invention contains the above polyacetal resin composition and metal powder (C). The metal resin composition is produced by melt-kneading the above polyacetal resin composition and metal powder (C). The melt-kneading step is conducted at or above the temperature at which the polyacetal resin composition melts (generally 180°C or higher). The metal resin composition (kneaded mixture) may be in the form of a solid, powder, strand, or pellet.

The metal resin composition has a flowability of 9 g/10 min or more, especially 10/g min or more, as measured according to ASTM-D1238 at a temperature of 190°C and a load of 10 kg. Preferably, the metal resin composition has a flowability of 10-800 g/10 min, 10-700 g/10 min, 10-600 g/10 min, 10-500 g/10 min, 10-400 g/10 min, 10-300 g/10 min, 10-200 g/10 min, 10-100 g/10 min, 10-90 g/10 min, 10-80 g/10 min, 10-70 g/10 min, 10-60 g/10 min, or 10-50 g/10 min.

In addition, the flexural strain (%) of the metal resin composition is measured, for example, by preparing a molded piece of 12.7 mm x 63.5 mm x 3.2 mm thick, and performing a three-point flexural test using "Autograph (registered trademark) AGS-X" provided by Shimadzu Corporation at a bending rate of 2 mm/min, using the point at which the flexural strength reaches its maximum as the flexural strain.

The metal resin composition has a flexural strain of 0.8% or more, especially 1.0% or more. Preferably, the metal resin composition has a flexural strain of 1.0-12.0%, 1.0-10.0%, 1.0-9.0%, 1.0-8.5%, 1.0-8.0%, 1.0-7.0%, 1.0-6.0%, 1.0-5.0%, or 1.0-4.5%.

### [Metal powder (C)]

The metal of the metal powder (C) is iron, aluminum, magnesium, cobalt, zinc, copper, nickel, titanium, tungsten, or a metal compound or a metal alloy based on these metals. Preferably, the metal powder (C) is stainless steel (SUS) powder, and the stainless steel is austenitic-based stainless steel (SUS300 series), ferrite- and martensite-based stainless steel (SUS400 series), or precipitation hardening stainless steel (SUS600 series). Particularly preferably, it is precipitation hardening stainless steel (SUS600 series). While the particle size (average particle size) of the metal powder (C) is not particularly limited, it is 1-100 µm, 1-50 µm, 1-25 µm, or 1-10 µm, as measured by electron micrograph or laser diffraction/scattering particle size distribution measurement.

The content of the metal powder (C) in the metal resin composition is 60-95% by weight, 65-95% by weight, 70-95% by weight, 80-95% by weight, 85-95% by weight, or 70-90% by weight, based on the weight of the metal resin composition. In other words, the content of the polyacetal resin composition in the metal resin composition is 5-40% by weight, 5-35% by weight, 5-30% by weight, 5-20% by weight, 5-15% by weight, or 10-30% by weight.

Alternatively, the content of the metal powder (C) in the metal resin composition is 60% by weight or more but less than 95% by weight, 65% by weight or more but less than 90% by weight, 70% by weight or more but less than 90% by weight, 60-85% by weight, 65-85% by weight, or 70-85% by weight, based on the weight of the metal resin composition.

Note that "A-B" represents A or more but B or less. For example, 60-95% by weight means 60% by weight or more but 95% by weight or less.

### [Method for producing powder injection-molded article]

A method for producing a powder injection-molded article of the present invention comprises a step of injecting a kneaded mixture obtained by melt-kneading metal powder (C) and a binder resin composition into a mold, wherein the binder resin composition is the polyacetal resin composition described above. This production method may also comprise a step of removing the binder resin composition by heating the molded kneaded mixture in a degreasing furnace or exposing the molded kneaded mixture to a gaseous acid, and a step of sintering the molded article in a sintering furnace to form a powder injection-molded article.

### [Optional components]

Other additives, such as a stabilizer, a nucleating agent, a mold release agent, a filler, a pigment, a lubricant, a plasticizer, a UV absorber, a flame retardant, or a flame retardant auxiliary, may optionally be added to the polyacetal resin composition as needed so long as the purpose of the present invention is not impaired. Examples of the optional additives include glass fiber, glass flakes, glass beads, wollastonite, mica, talc, boron nitride, calcium carbonate, kaolin, silicon dioxide, clay, asbestos, silica, diatomite, graphite, molybdenum disulfide, glass fiber, middle fiber, potassium titanate fiber, boron fiber, carbon fiber, aramid fiber, potassium titanate whisker, carbon black, and pigments.

In one aspect, the polyacetal resin composition of the present invention further comprises 0.01-1.0 parts by weight, 0.01-0.7 parts by weight, 0.01-0.5 parts by weight, 0.01-0.3 parts by weight, 0.01-0.1 parts by weight, 0.1-0.5 parts by weight, or 0.1-0.3 parts by weight of one or more stabilizers, relative to 100 parts by weight of the polyacetal resin (A). The stabilizer includes an antioxidant, a heat resistance stabilizer, or a combination thereof. The antioxidant is triethylene glycol-bis[3-(3-t-butyl-5-methyl-4-hydroxyphenyl)propionate], ethylene bis(oxyethylene)bis[3-(5-tert-butyl-4-hydroxy-m-tolyl)propionate, 1,3,5-trimethyl-2,4,6-tris(3,5-di-t-butyl-4-hydroxybenzyl)benzene, pentaerythritol-tetrakis[3-(3,5-di-t-butyl-4-hydroxyphenyl)propionate], or a combination thereof, preferably triethylene glycol-bis[3-(3-t-butyl-5-methyl-4-hydroxyphenyl)propionate]. The heat resistance stabilizer is melamine, methylolmelamine, alkylated melamine, benzoguanamine, a water-soluble melamine-formaldehyde resin, or a combination thereof, preferably melamine.

In one aspect, the polyacetal resin composition of the present invention further comprises 0.01-1.0 parts by weight, 0.01-0.7 parts by weight, 0.01-0.5 parts by weight, 0.1-0.5 parts by weight, or 0.1-0.3 parts by weight of triethylene glycol-bis[3-(3-t-butyl-5-methyl-4-hydroxyphenyl)propionate] and 0.01-1.0 parts by weight, 0.01-0.7 parts by weight, 0.01-0.5 parts by weight, 0.01-0.3 parts by weight, or 0.01-0.1 parts by weight of melamine.

### EXAMPLES

Hereinafter, examples of the present invention will be described. The materials used in the examples and comparative examples are listed below.

### [Polyacetal resin (A)]

Polyacetal resin (A-1) used in the examples and comparative examples was an oxymethylene copolymer of trioxane and 1,3-dioxolane, which was prepared as follows.

To 100 parts by weight of trioxane, 4.5 parts by weight of 1,3-dioxolane, 0.06 mmol (relative to 1 mol of the total monomer) of boron trifluoride diethyl etherate in a benzene solution (0.62 mol/Kg benzene) as a catalyst, and 2,000 ppm (relative to the total monomer) of methylal in a benzene solution (25% by weight) as a molecular weight regulator were continuously added, and polymerization was carried out continuously in a twin-shaft kneader with a self-cleaning paddle having a jacket set at a temperature of 65°C such that the time spent in the polymerizer was 15 minutes. To the resulting polymer, triphenylphosphine in a benzene solution (25% by weight) was added in an amount of 2 mol per 1 mol of the added boron trifluoride diethyl etherate, and the resultant was ground after deactivating the catalyst to obtain polyacetal resin (A-1) (polyacetal resin 1).

Polyacetal resin (A-2) used in the examples was an oxymethylene copolymer of trioxane and 1,3-dioxolane, which was prepared as follows.

To 100 parts by weight of trioxane, 4.0 parts by weight of 1,3-dioxolane, 0.06 mmol (relative to 1 mol of the total monomer) of boron trifluoride diethyl etherate in a benzene solution (0.62 mol/Kg benzene) as a catalyst, and 2,500 ppm (relative to the total monomer) of methylal in a benzene solution (25% by weight) as a molecular weight regulator were continuously added, and polymerization was carried out continuously in a twin-shaft kneader with a self-cleaning paddle having a jacket set at a temperature of 65°C such that the time spent in the polymerizer was 15 minutes. To the resulting polymer, triphenylphosphine in a benzene solution (25% by weight) was added in an amount of 2 mol per 1 mol of the added boron trifluoride diethyl etherate, and the resultant was ground after deactivating the catalyst to obtain polyacetal resin (A-2) (polyacetal resin 2).

The melt flow rates of polyacetal resins (A-1) and (A-2) were determined as follows.

To 100 parts by weight of polyacetal resin (A-1) or (A-2), 0.3 parts by weight of triethylene glycol-bis[3-(3-t-butyl-5-methyl-4-hydroxyphenyl)propionate] (provided by BASF, product name: IRGANOX (registered trademark) 245) and 0.05 parts by weight of melamine (provided by Mitsui Chemicals, Inc.) as stabilizers were added and mixed, and the mixture was melt-kneaded in kneader "Laboplast Mill (trademark registration) 4C150" provided by Toyo Seiki Seisaku-sho, Ltd. at a set temperature of 220°C and a rotational speed of 30 rpm for 20 minutes under nitrogen flow (nitrogen flow rate: 5,000 mL/min). The resultant was ground and its flowability was measured according to ASTM-D1238 using melt indexer "L241" provided by Takara Kogyo at a temperature of 190°C and a load of 2.16 kg. According to the results of the measurement, the melt flow rate of polyacetal resin (A-1) was 45 g/10 min while that of polyacetal resin (A-2) was 88 g/10 min.

### [Fatty acid metal salt (B)]

Fatty acid metal salt (B-1) is magnesium stearate "IMN" provided by Dainichi Chemical Industry Co., Ltd. (Magnesium stearate 1). The weight loss rate of (B-1) magnesium stearate 1 is 49.7% by weight.

Fatty acid metal salt (B-2) is aluminum stearate "Aluminum Stearate 300" provided by NOF Corporation (Aluminum stearate 1). The weight loss rate of (B-2) aluminum stearate 1 is 22.7 by weight.

Fatty acid metal salt (B-3) is aluminum stearate "Aluminum Stearate 600" provided by NOF Corporation (Aluminum stearate 2). The weight loss rate of (B-3) aluminum stearate 2 is 28.5 by weight.

Fatty acid metal salt (B-4) is aluminum stearate "Aluminum Stearate 900" provided by NOF Corporation (Aluminum stearate 3). The weight loss rate of (B-4) aluminum stearate 3 is 25.7 by weight.

Fatty acid metal salt (B-5) is magnesium stearate "Kou Magnesium Stearate" provided by NOF Corporation (Magnesium stearate 2). The weight loss rate of (B-5) magnesium stearate 2 is 14.3% by weight.

Fatty acid metal salt (B-6) is magnesium stearate "Magnesium Stearate GP" provided by NOF Corporation (Magnesium stearate 3). The weight loss rate of (B-6) magnesium stearate 3 is 12.8% by weight.

Fatty acid metal salt (B-7) is magnesium stearate "M" provided by Dainichi Chemical Industry Co., Ltd. (Magnesium stearate 4). The weight loss rate of (B-7) magnesium stearate 4 is 12.4% by weight.

### [Metal powder (C)]

Metal powder (C) is SUS630 powder (average particle size: about 10 µm) provided by Epson Atmix Corporation.

### [Example 1]

As shown in Table 1, a polyacetal resin composition of Example 1 was prepared by adding 0.3 parts by weight of triethylene glycol-bis[3-(3-t-butyl-5-methyl-4-hydroxyphenyl)propionate] (provided by BASF, product name: IRGANOX (registered trademark) 245) and 0.05 parts by weight of melamine (provided by Mitsui Chemicals, Inc.) as stabilizers, along with 0.15 parts by weight of magnesium stearate (B-1), to 100 parts by weight of polyacetal resin (A-1), and melt-kneading the mixture in kneader "Laboplast Mill (trademark registration) 4C150" provided by Toyo Seiki Seisaku-sho, Ltd. at a set temperature of 220°C and a rotational speed of 30 rpm for 20 minutes under nitrogen flow (nitrogen flow rate: 100 mL/min). The polyacetal resin composition was ground using granulator "GranCutter (trademark registered) SPC-400" provided by HARMO Co., Ltd. The resultant was dried in an oven at a temperature of 120°C for 12 hours.

A metal resin composition of Example 1 was prepared by kneading 20 g of the polyacetal resin composition (10% by weight based on the weight of the metal resin composition) and 180 g of metal powder (C) (90% by weight based on the weight of the metal resin composition) in kneader "Laboplast Mill (registered trademark) 4C150" provided by Toyo Seiki Seisaku-sho, Ltd. at a set temperature of 180°C and a rotational speed of 60 rpm for 40 minutes under nitrogen flow (nitrogen flow rate: 5,000 mL/min.), and cooling and solidifying the kneaded mixture. For the measurements of flexural strain and flowability properties, the kneaded mixture (metal resin composition) was ground using granulator "GranCutter (trademark registered) SPC-400" provided by HARMO Co., Ltd.

### [Examples 2-23]

In the same manner as in Example 1, polyacetal resin (A-1, A-2), 0.3 parts by weight of triethylene glycol-bis[3-(3-t-butyl-5-methyl-4-hydroxyphenyl)propionate] (provided by BASF, product name: IRGANOX (registered trademark) 245) and 0.05 parts by weight of melamine (provided by Mitsui Chemicals, Inc.) as stabilizers, as well as fatty acid metal salt (B-1 to B-4) were used according to the types and amounts (parts by weight) shown in Table 1 to prepare polyacetal resin compositions of Examples 2-23 by melt-kneading polyacetal resin (A-1, A-2) and fatty acid metal salt (B-1 to B-4).

Metal resin compositions of Examples 2-17 were prepared in the same manner as in Example 1, so as to contain 20 g of the polyacetal resin composition (10% by weight based on the weight of the metal resin composition) and 180 g of metal powder (C) (90% by weight of based on the weight of the metal resin composition). Metal resin compositions of Examples 18-23 were prepared in the same manner as in Example 1, so as to contain 60 g of the polyacetal resin composition (30% by weight based on the weight of the metal resin composition) and 140 g of metal powder (C) (70% by weight based on the weight of the metal resin composition).

### [Comparative examples 1-9]

In the same manner as in Example 1, polyacetal resin (A-1), 0.3 parts by weight of triethylene glycol-bis[3-(3-t-butyl-5-methyl-4-hydroxyphenyl)propionate] (provided by BASF, product name: IRGANOX (registered trademark) 245) and 0.05 parts by weight of melamine (provided by Mitsui Chemicals, Inc.) as stabilizers, as well as fatty acid metal salt (B-1, B-5 to B-7) were used according to the types and amounts (parts by weight) shown in Table 2 to prepare polyacetal resin compositions of Comparative examples 1-9.

Metal resin compositions of Comparative examples 1-7 were prepared in the same manner as in Example 1, so as to contain 20 g of the polyacetal resin composition (10% by weight based on the weight of the metal resin composition) and 180 g of metal powder (C) (90% by weight based on the weight of the metal resin composition). Metal resin compositions of Comparative examples 8 and 9 were prepared in the same manner as in Example 1, so as to contain 60 g of the polyacetal resin composition (30% by weight based on the weight of the metal resin composition) and 140 g of metal powder (C) (70% by weight based on the weight of the metal resin composition).

The weight loss rates of fatty acid metal salts B-1 to B-7 determined by thermogravimetric analysis, the hue (b values) of the polyacetal resin compositions, and the flexural strain and flowability properties of the metal resin compositions were measured as follows.

### [Measurement methods and evaluation methods]

### (1) Thermogravimetric analysis of fatty acid metal salts

The instrument used for the thermogravimetric analysis of the fatty acid metal salts (B) was thermoanalyzer: TGA550 provided by TA Instruments. The "weight loss rate" was defined as the percentage of weight loss that occurs when 4 mg of a sample of the fatty acid metal salt (B) was heated from room temperature (20°C) to 200°C at 200°C/min in air at atmospheric pressure and held at 200°C for 60 minutes.

The weight loss rate was determined for each of fatty acid metal salts (B-1 to B-7).

### (2) Hue of polyacetal resin compositions

The ground polyacetal resin compositions were molded into plates using "C, Mobile Model 0813" provided by EPSON TcFORM Corporation at a manifold temperature of 230°C and a body heater temperature of 220°C, and the plates were used for hue evaluation. Hue was evaluated by measuring each of L, a, and b values using spectrophotometer "SE6000" provided by Nippon Denshoku Industries Co., Ltd., and the b value was used as the hue value. The lower the b value, the lower the yellowing level. According to the present invention, yellowing was evaluated to be suppressed and hue was evaluated as good when the b value was 4.0 or lower.

### (3) Flexural strain

Molded pieces of 12.7 mm x 63.5 mm x 3.2 mm thick were prepared from the ground kneaded mixtures (metal resin compositions) using small desktop injection molding machine "HAAKE MiniJet" provided by Thermo Fisher Scientific Inc. at a cylinder temperature of 220°C. Three-point flexural tests were conducted on the molded pieces using "Autograph (registered trademark) AGS-X" provided by Shimadzu Corporation at a bending rate of 2 mm/min, and the point at which the flexural strength reaches its maximum was used as the flexural strain (%). The flexural strain value of the metal resin composition is preferably 1.0% or more.

### (4) Flowability

The flowability of the ground kneaded mixtures (metal resin compositions) was measured according to ASTM-D1238 using melt indexer "L241" provided by Takara Kogyo at a temperature of 190°C and a load of 10 kg. The flowability value of the metal resin composition is preferably 10 g/10 min or more.

**[Table 1]**

| | Weight loss rate of fatty acid metal salt (% by weight) | Examples | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| (A-1) Polyacetal resin 1 | - | 100 | 100 | 100 | 100 | 100 | 100 | 100 | 100 | - | - | - | - | 100 | 100 | 100 | 100 | 100 |
| (A-2) Polyacetal resin 2 (B-1) Magnesium stearate 1 | - 49.7 | - 0.15 | - - | - - | - - | - 0.5 | - - | - - | - - | 100 0.15 | 100 - | 100 - | 100 - | - 0.075 | - 0.075 | - 0.075 | - 0.1 | - - |
| (B-2) Aluminum stearate 1 (B-3) Aluminum stearate 2 | 22.7 28.5 | - - | 0.15 - | - 0.15 | - - | - - | 0.5 - | - 0.5 | - - | - - | 0.15 - | - 0.15 | - - | 0.075 - | - 0.075 | - - | - - | 0.1 - |
| (B-4) Aluminum stearate 3 | 25.7 | - | - | - | 0.15 | - | - | - | 0.5 | - | - | - | 0.15 | - | - | 0.075 | - | - |
| b value of polyacetal resin composition | - | 3.6 | 0.8 | 0.6 | 1.7 | 3.7 | -0.5 | 0.6 | 2.7 | 3.7 | 1.0 | 0.9 | 1.9 | 2.0 | 2.0 | 2.5 | 3.5 | 0.9 |
| Properties of metal resin composition (polyacetal resin composition (10% by weight) + SUS630 powder (90% by weight)) | | | | | | | | | | | | | | | | | | |
| Flexural strain (%) | - | 1.1 | 1.0 | 1.2 | 1.2 | 4.5 | 2.6 | 2.4 | 2.2 | 1.1 | 1.0 | 1.1 | 1.2 | 1.2 | 1.3 | 1.3 | 0.9 | 0.8 |
| Flowability (g/10 min: 190°C, 10 kg) | - | 20 | 14 | 12 | 11 | 35 | 31 | 35 | 42 | 22 | 18 | 15 | 17 | 18 | 16 | 17 | 15 | 9 |

| | Weight loss rate of fatty acid metal salt (% by weight) | Examples | | | | | |
|---|---|---|---|---|---|---|---|
| | | 18 | 19 | 20 | 21 | 22 | 23 |
| (A-1) Polyacetal resin 1 | - | 100 | 100 | 100 | 100 | 100 | 100 |
| (B-1) Magnesium stearate 1 | 49.7 | 0.15 | - | - | - | 0.1 | - |
| (B-2) Aluminum stearate 1 | 22.7 | - | 0.15 | - | - | - | 0.1 |
| (B-3) Aluminum stearate 2 (B-4) Aluminum stearate 3 | 28.5 25.7 | - - | - - | 0.15 - | - 0.15 | - - | - - |
| b value of polyacetal resin composition | - | 3.6 | 0.8 | 0.6 | 1.7 | 3.5 | 0.9 |
| Properties of metal resin composition (polyacetal resin composition (30% by weight) + SUS630 powder (70% by weight)) | | | | | | | |
| Flexural strain (%) | - | 7.6 | 7.1 | 8.3 | 8.4 | 6.4 | 5.7 |
| Flowability (g/10 min: 190°C, 10 kg) | - | 390 | 278 | 235 | 219 | 290 | 187 |

**[Table 2]**

| | Weight loss rate of fatty acid metal salt (% by weight) | Comparative examples | | | | | | |
|---|---|---|---|---|---|---|---|---|
| | | 1 | 2 | 3 | 4 | 5 | 6 | 7 |
| (A-1) Polyacetal resin 1 | - | 100 | 100 | 100 | 100 | 100 | 100 | 100 |
| (B-1) Magnesium stearate 1 | 49.7 | - | - | - | - | - | - | 1.0 |
| (B-5) Magnesium stearate 2 | 14.3 | 0.15 | - | - | 0.5 | - | - | - |
| (B-6) Magnesium stearate 3 | 12.8 | - | 0.15 | - | - | 0.5 | - | - |
| (B-7) Magnesium stearate 4 | 12.4 | - | - | 0.15 | - | - | 0.5 | - |
| b value of polyacetal resin composition | - | 4.5 | 4.2 | 4.9 | 7.3 | 8.7 | 12.7 | 4.8 |
| Properties of metal resin composition (polyacetal resin composition (10% by weight) + SUS630 powder (90% by weight)) | | | | | | | | |
| Flexural strain (%) | - | 1.3 | 1.2 | 1.0 | 5.6 | 5.3 | 5.4 | 7.3 |
| Flowability (g/10 min: 190°C, 10 kg) | - | 15 | 10 | 12 | 30 | 31 | 29 | 63 |

| | Weight loss rate of fatty acid metal salt (% by weight) | Comparative examples | |
|---|---|---|---|
| | | 8 | 9 |
| (A-1) Polyacetal resin 1 | - | 100 | 100 |
| (B-5) Magnesium stearate 2 | 14.3 | 0.15 | - |
| (B-6) Magnesium stearate 3 | 12.8 | - | 0.15 |
| b value of polyacetal resin composition | - | 4.5 | 4.2 |
| Properties of metal resin composition (polyacetal resin composition (30% by weight) + SUS630 powder (70% by weight)) | | | |
| Flexural strain (%) | - | 8.3 | 8.3 |
| Flowability (g/10 min: 190°C, 10 kg) | - | 270 | 195 |

As shown in Tables 1 and 2, the polyacetal resin compositions of Examples 1-23 all had b values of 4.0 or less with suppressed yellowing and improved hue. On the other hand, the b values of Comparative examples 1-9 were over 4.0, and no improvement in the hue was observed.

In particular, the polyacetal resin compositions of Examples 1-15 and 18-21 had excellent hue with suppressed yellowing, and the metal resin compositions thereof had favorable properties in terms of both flexural strain (1.0% or more) and flowability (10 g/10 min or more).

## Claims

1. A polyacetal resin composition, comprising:
100 parts by weight of a polyacetal resin (A); and
0.1-0.9 parts by weight of a fatty acid metal salt (B) whose weight loss rate is 20% by weight or more,
wherein, the weight loss rate is the percentage of weight loss that occurs when the temperature is increased from room temperature to 200°C at 200°C/min in air at atmospheric pressure and held at 200°C for 60 minutes.

2. The polyacetal resin composition according to claim 1, wherein the fatty acid metal salt (B) is magnesium stearate whose weight loss rate is 20% by weight or more, aluminum stearate whose weight loss rate is 20% by weight or more, or a combination thereof.

3. The polyacetal resin composition according to either one of claims 1 and 2, wherein the melt flow rate of the polyacetal resin (A) is 40-100 g/10 min (temperature: 190°C, load: 2.16 kg).

4. The polyacetal resin composition according to any one of claims 1-3, comprising 0.14-0.6 parts by weight of the fatty acid metal salt (B).

5. The polyacetal resin composition according to any one of claims 1-4, wherein the polyacetal resin (A) is a crude polymer of a polyoxymethylene copolymer in which the polymerization catalyst has been deactivated but the unstable terminal group is not stabilized at the end of copolymerization.

6. The polyacetal resin composition according to any one of claims 1-5, further comprising 0.01-1.0 parts by weight of one or more stabilizers.

7. The polyacetal resin composition according to any one of claims 1-6, which is used by kneading with metal powder.

8. A metal resin compositions, comprising:
the polyacetal resin composition according to any one of claims 1-7; and
metal powder (C).

9. A method for producing a polyacetal resin composition which is used by kneading with metal powder, the method comprising a step of:
melt-kneading 100 parts by weight of a polyacetal resin (A) and 0.1-0.9 parts by weight of a fatty acid metal salt (B) whose weight loss rate is 20% by weight or more to prepare the polyacetal resin composition,
wherein, the weight loss rate is the percentage of weight loss that occurs when the temperature is increased from room temperature to 200°C at 200°C/min in air at atmospheric pressure and held at 200°C for 60 minutes, and
the fatty acid metal salt (B) is magnesium stearate whose weight loss rate is 20% by weight or more, aluminum stearate whose weight loss rate is 20% by weight or more, or a combination thereof.

10. A method for producing a powder injection-molded article, the method comprising a step of injecting a kneaded mixture obtained by melt-kneading metal powder and a binder resin composition into a mold,
wherein, the binder resin composition is the polyacetal resin composition according to any one of claims 1-7.
